Europäisches Patentamt

European Patent Office

Office européen des brevets

(19)

(11) **EP 1 496 589 A1**

(12) **EUROPÄISCHE PATENTANMELDUNG**

(43) Veröffentlichungstag:
**12.01.2005 Patentblatt 2005/02**

(51) Int Cl.⁷: **H02H 6/00**

(21) Anmeldenummer: **03015895.0**

(22) Anmeldetag: **11.07.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **SIEMENS AKTIENGESELLSCHAFT
80333 München (DE)**

(72) Erfinder:
• **Fritsch, Andreas
92245 Kümmersbruck (DE)**
• **Heberlein, Thomas
92694 Etzenricht (DE)**
• **Prölss, Manfred
92263 Ebermannsdorf (DE)**

(54) **Vorrichtung und Verfahren zum Schutz einer elektrischen Maschine**

(57)    Die zeitliche Vorhersage, wann ein Überlastgerät auslösen soll, soll besser genutzt werden. Hierzu ist vorgesehen, dass die Bestimmung der zeitlichen Auslösereserve mit einer entsprechenden Auswertung verknüpft wird. Damit kann beispielsweise dynamisch bestimmt werden, ob ein gewünschter Prozess in seiner Gesamtlänge ausgeführt werden kann, oder ob er automatisch abgebrochen wird. Hierbei können entsprechende Warnsignale bereitgestellt werden.

FIG 1

EP 1 496 589 A1

**Beschreibung**

Die vorliegende Erfindung betrifft eine Schutzvorrichtung für eine elektrische Maschine gegen Stromüberlastung. Darüber hinaus betrifft die vorliegende Erfindung ein entsprechendes Verfahren zum Schutz einer elektrischen Maschine.

Elektrische Maschinen, insbesondere Motoren, können zeitweise mit einem Strom betrieben werden, dessen Stärke oberhalb der Nenn- beziehungsweise Dauerstromstärke liegt. Der Grund hierfür ist, dass die Überhitzung der elektrischen Maschine erst nach einer gewissen Zeit eintritt. Die elektrischen Maschinen sind daher in gewisse $\tau$-Klassen (CLASS oder Abschaltklasse) eingeteilt. Hierin ist jeweils das zugelassene Mehrfache des Nennstroms und die Zeitdauer, mit der die elektrische Maschine mit diesem erhöhten Strom betrieben werden kann, ohne dass eine Überhitzung eintritt, definiert.

Bislang werden für den Motorschutz typischerweise mechanische Überlastrelais verwendet. Diese sind durch einen Bimetallstreifen in der Lage, den Energiezufluss bei Überschreitung eines Grenzstroms zu unterbrechen, wobei die Zeit bis zur Unterbrechung eine Funktion des Stroms ist. Das hierfür verwendete Bimetall wird in elektronischen Überlastgeräten seit geraumer Zeit mittels Software/Firmware in seinen thermischen Eigenschaften nachgebildet. Hierbei wird eine thermische Größe, nämlich das Thermische Motormodell (TMM), verwendet, um eine thermische Motormodellkurve in Abhängigkeit eines aktuellen Stroms zu erstellen. Das Thermische Motormodell TMM lässt sich wie folgt darstellen:

$$TMM = \left[1 - e^{-\frac{t}{\tau}}\right] \cdot \frac{I_{akt}}{I_{grenz}}$$

Dabei entspricht $\tau$ derjenigen Zeit aus der $\tau$-Klassifikation, $I_{akt}$ dem aktuellen Stromwert, $I_{grenz}$ einem vorgegebenen Stromgrenzwert und t der Zeit. Das Auslösen eines Überlastgeräts erfolgt, wenn TMM = 1 = 100 % ist. Somit lässt sich unter Annahme von konstanten Strömen der jeweilige Auslösezeitpunkt berechnen, wenn die Maschine neu, d. h. bei TMM = 0, gestartet wird.

Da diese Berechnung in der Firmware wegen der Notwendigkeit einer exakten Zeitstempelung aufwändig ist, wird die Funktion über den folgenden rekursiven Zeitansatz nachgebildet:

$$TMM_{n+1} = TMM_n - \frac{TMM_n}{\frac{\tau}{\Delta t}} + \frac{I_{akt}}{\frac{\tau}{\Delta t}}$$

Die Funktionswerte werden im Zeitraster $\Delta t$ berechnet und der jeweilige Wert $TMM_{n+1}$ wird gegenüber einer stromabhängigen Abschaltschwelle, einem vorgegebenen Wert, überwacht.

Mit dieser Implementierung ist es möglich, einen Auslösetrigger für die Überlastfunktion zu realisieren. Dabei wird ein Auslösen mittels eines Abschaltbefehls oder unmittelbarer Stromunterbrechung durchgeführt.

Eine Meldung/Warnung, ob eine Auslösung durch das Überlastgerät stattfinden wird, ist mit dieser Technologie ebenfalls möglich. Hierzu wird geprüft, ob der aktuelle Strom größer als ein vorgegebener Grenzstrom ist. Dabei bleibt unter Umständen eine große zeitliche, thermische Reserve des Motors unberücksichtigt. Eine Vorhersage, wann voraussichtlich ein Auslösen des Überlastgeräts stattfinden wird, wird bislang wie folgt erstellt: Eine SPS liest aus dem elektronischen Überlastgerät den aktuellen Wert des TMM sowie den aktuellen Strom aus, um dann mit gegebenen Konstanten eine Vorhersage zu treffen. Eine zwangsläufige Voraussetzung ist daher, dass das Überlastgerät kommunikationsfähig ist. Ein weiterer Nachteil bei der Erstellung der Vorhersage ist, dass der aktuelle Betriebszustand des Überlastrelais (CLASS, Unsymmetrie, aktueller Stromwert, aktueller Grenzwert,...) nachgebildet werden muss. Die Vorhersage ist deshalb mit sehr hohem Aufwand verbunden und daher nicht mehr in Echtzeit durchführbar. Als weiterer Nachteil stellt sich heraus, dass der Anwender die Modellfunktion im Anwenderprogramm seiner Steuerung nachbilden muss. Dazu ist entsprechendes Know-how notwendig und es kommt zu erheblichen Zyklusbelastungen.

Die Aufgabe der vorliegenden Erfindung besteht somit darin, eine Vorrichtung und ein Verfahren zum Schutz elektrischer Maschinen vorzuschlagen mit denen eine Vorhersage einer zeitlichen Auslösereserve ohne großen Aufwand möglich ist.

Erfindungsgemäß wird diese Aufgabe gelöst durch eine Schutzvorrichtung für eine elektrische Maschine gegen Stromüberlastung mit einer Stromwertbereitstellungseinrichtung zum Bereitstellen eines aktuellen Stromwerts, mit dem die elektrische Maschine angesteuert wird, einer Vorhersageeinrichtung zum Vorhersagen eines absoluten oder relativen Zeitwerts in Abhängigkeit von dem aktuellen Stromwert und einer Verwertungseinrichtung zum Verwerten des Zeitwerts zur Erzeugung eines Steuerungssignals.

Ferner ist erfindungsgemäß vorgesehen ein Verfahren zum Schutz einer elektrischen Maschine gegen Stromüberlastung durch Bereitstellen eines aktuellen Stromwerts, mit dem die elektrische Maschine angesteuert wird, Vorhersagen eines absoluten oder relativen Zeitwerts in Abhängigkeit von dem aktuellen Stromwert und Erzeugen eines Steuerungssignals unter Verwendung des Zeitwerts und Ansteuern der elektrischen Maschine mit dem Steuerungssignal.

Erfindungsgemäß ist somit eine zeitliche Vorhersage zusammen mit einer Auswertung der dynamischen zeitlichen Auslösereserve einer elektronischen Überlastfunktion in einem Gerät mit Überlastfunktionalität realisierbar.

In der Vorhersageeinrichtung kann eine aktuelle thermische Größe hinsichtlich der elektrischen Maschine bezogen auf den aktuellen Stromwert berechnet werden, so dass die thermische Größe als Grundlage für die Vorhersage verwendet werden kann. Vorzugsweise wird die thermische Größe, z. B. das Thermische Motormodell TMM, in der Vorhersageeinrichtung rekursiv berechnet. Die aktuelle thermische Größe wird zweckmäßigerweise dazu verwendet, um den Zeitwert für die Vorhersage dynamisch zu berechnen.

Vorteilhafterweise ist die Vorhersageeinrichtung und/oder die Verwertungseinrichtung parametrierbar. Damit können beliebige Grenzwerte und Geräteeigenschaften vorgegeben werden und in die Vorhersage beziehungsweise Verwertung eingehen.

In der Verwertungseinrichtung kann als Steuerungssignal ein Abschaltsignal oder Warnsignal erzeugt werden. Damit kann die Vorhersage dazu verwendet werden, dass ein gewünschter Steuerungszyklus mit überhöhtem Strom überhaupt nicht ermöglicht wird oder bei der Erstellung oder Verwendung des Steuerungszyklusses eine Warnung ausgegeben wird, dass der Steuerungszyklus nicht vollständig durchlaufen und ein vorzeitiger Abbruch erfolgen wird.

Erfindungsgemäß ist es daher möglich, dass die Berechnung der Vorhersage der zeitlichen Auslösereserve in einem Gerät mit Überlastfunktion integriert ist. Durch diese Integration ist es nicht mehr notwendig, dass das Gerät mit Überlastfunktion kommunikationsfähig ist.

In einer konkreten Ausführung kann die zeitliche Auslösereserve mittels Grenzwertwächter an einem Predictorgrenzwert überwacht werden. Die zeitliche Auslösereserve und/oder das Ergebnis des Grenzwertwächters kann ferner lokal verarbeitet oder zur Verarbeitung an die Steuerung (SPS) weitergegeben werden. Der Predictorgrenzwert und das anschließende Verhalten lassen sich, wie bereits angedeutet, gegebenenfalls parametrieren beziehungsweise einstellen.

In vorteilhafter Weise kann der Anwender die erfindungsgemäße Verbindung von Vorhersage und Auswertung zur Aufrechterhaltung seiner Prozesse nutzen. Darüber hinaus ist es erfindungsgemäß möglich, dass der Anwender die maximal zeitliche, thermische Reserve des Motors für seine Prozesse ausnutzt, ohne die Motorschutzfunktion zu verlieren oder seine Prozesse zu gefährden.

Ein weiterer Vorteil besteht darin, dass immer mit den aktuell gültigen Parametern/Konstanten/Betriebsumständen (CLASS, Ströme, Unsymmetrie bezüglich der Phasen) in Echtzeit gerechnet wird, da die Berechnung in dem Überlastgerät stattfindet. Dies bedeutet aber auch, dass die Vorhersage und Auswertung in nicht kommunikationsfähigen Geräten stattfinden kann, wobei die Verknüpfung von Vorhersage und Auswertung - wie bereits erwähnt - durch Parameter und Einstellelemente erfolgen kann.

Die vorliegende Erfindung wird nun anhand der beigefügten Zeichnungen näher erläutert, in denen zeigen:

FIG 1    ein Blockschaltdiagramm eines erfindungsgemäßen Motorschutzgeräts;

FIG 2    ein Stromverlaufsdiagramm; und

FIG 3    ein Diagramm der thermischen Größe TMM infolge des Stromverlaufs von FIG 2.

Die nachfolgend näher beschriebenen Ausführungsbeispiele stellen bevorzugte Ausführungsformen der vorliegenden Erfindung dar.

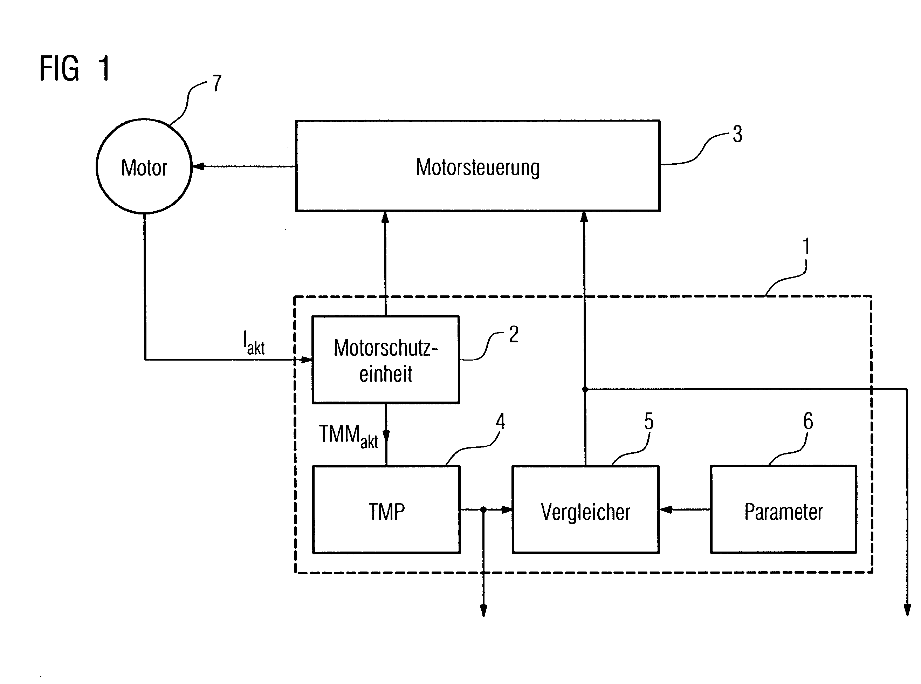

In FIG 1 ist mit gestrichelter Linie ein Motorschutzgerät 1 dargestellt. Dieses besitzt eine Motorschutzeinheit 2 zur Stromerfassung, Strombereitstellung und TMM-Bildung für den Motorschutz, das einen aktuellen Stromwert $I_{akt}$ von einem Motor 7 erhält. Für den Fall der Überhitzung gibt das Überlastgerät 2 einen entsprechenden Befehl an die Motorsteuerung 3 beziehungsweise unterbricht unmittelbar die Stromzufuhr zum angesteuerten Motor.

Die Motorschutzeinheit 2 liefert einen aktuellen thermischen Wert $TMM_{akt}$ an eine Vorhersageeinheit (TMP) 4, die ebenfalls in das Motorschutzgerät 1 integriert ist. Die Vorhersageeinheit 4 bildet aus dem thermischen Wert $TMM_{akt}$ einen zeitlichen Vorhersagewert, nämlich eine zeitliche Auslösereserve, und liefert ihn an einen an die Vorhersageeinheit 4 angeschlossenen und ebenfalls in das Motorschutzgerät 1 integrierten Vergleicher 5.

Der Vergleicher 5 ist über eine Parametriereinheit 6, die ebenfalls in das Motorschutzgerät 1 integriert ist, parametrierbar. Über die Parametriereinheit 6 können gegebenenfalls auch die Motorschutzeinheit 2 und die Vorhersageeinheit 4 parametriert werden. Entsprechende Verbindungen sind in FIG 1 der Übersicht halber nicht eingezeichnet.

Im Vergleicher 5 wird festgestellt, ob die zeitliche Auslösereserve größer oder kleiner als ein parametrierter Grenzwert (Predictorgrenzwert)ist. Ist die Auslösereserve kleiner als der parametrierte Grenzwert (Predictorgrenzwert), so wird an die Motorsteuerung 3 ein Warn- oder Steuersignal abgegeben, so dass der Anwender entweder gewarnt wird, dass bei der gewünschten Ansteuerung voraussichtlich ein automatisches Abschalten zu erwarten ist, oder ein Ansteuern des Motors mit der gewünschten Ansteuerkurve nicht zugelassen wird.

Die Motorsteuerung 3 kann auch in das Motorschutzgerät 1 integriert sein.

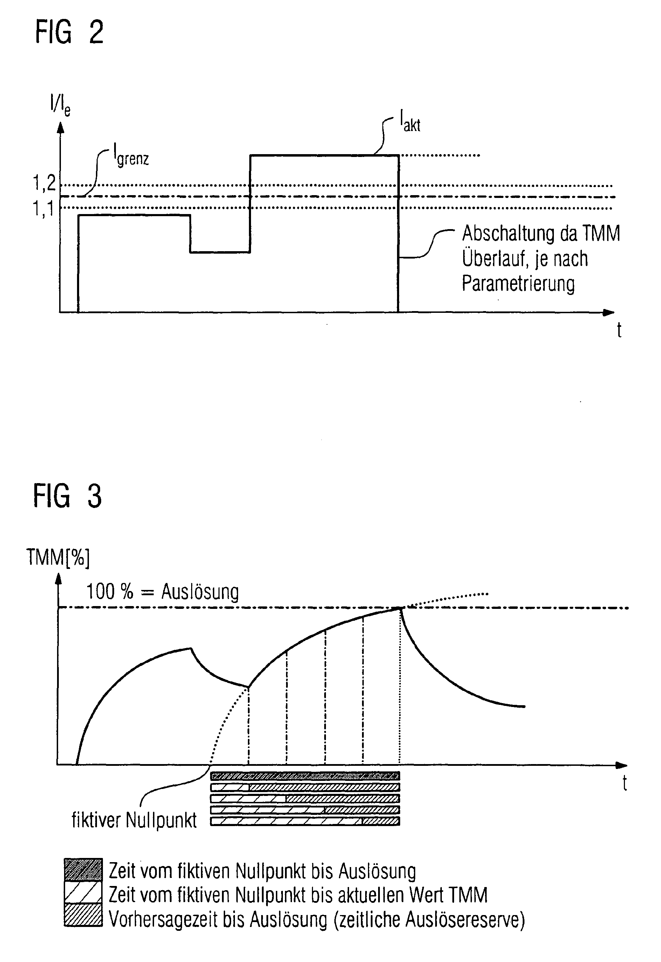

In dem in FIG 2 gewählten Beispiel wird der Motor zunächst mit einem Strom betrieben, der unterhalb eines normierten Grenzstromtors liegt. Dieses Grenzstromtor ist definiert als 1,1...1,2 x $I_e$. Dabei entspricht $I_e$ dem Einstell- beziehungsweise Nennstrom, mit dem der Motor dauerhaft betrieben werden kann. Nach einer gewissen Zeit sinkt (z. B. durch Lastveränderung) der Strom $I_{akt}$ und steigt dann über das Grenzstromtor, in dem ein zu definierender Grenzstrom $I_{grenz}$ liegt, an. Dieser hohe Strom würde dazu führen, dass der Motor langfristig überhitzt wird.

In FIG 3 ist die dem Stromverlauf gemäß FIG 2 zeitlich entsprechende thermische Größe TMM aufgetragen. Der Kurvenverlauf in den stetigen Abschnitten ist durch die in der Beschreibungseinleitung beschriebene Exponentialfunktion gegeben. Dementsprechend steigt die Temperatur des Motors nach dem Einschalten des Motors gemäß der genannten Exponentialfunktion an und würde aber nicht eine bestimmte Auslöseschwelle, hier 100 %, erreichen, da sich der Strom unterhalb des Grenzstroms (vergleiche FIG 2) befindet. Bei der anschließenden Reduzierung des Stroms sinkt auch die Temperatur wieder ab. Wird dann der Strom auf einen Wert oberhalb des Grenzstroms $I_{grenz}$ erhöht, so steigt die Temperatur stetig an und erreicht die Auslöseschwelle TMM = 100 %. An diesem Punkt wird der Strom zum Motor abgeschaltet (vergleich FIG 2), so dass auch die Temperatur des Motors wieder allmählich absinkt (vergleiche FIG 3).

Für die Ansteuerung des Motors beziehungsweise die Festlegung von Stromansteuerprofilen ist es notwendig, die zeitliche Auslösereserve, bei der TMM den Schwellwert 100 % erreicht, zu kennen. Es soll damit eine Vorhersage der zeitlichen Auslösereserve zu beliebigen Zeitpunkten in Echtzeit erfolgen können. Dabei soll nicht nur von dem statischen Fall ausgegangen werden, dass der Motor dauerhaft mit konstantem Strom angesteuert wird, sondern auch die dynamische Variante betrachtet werden können, wenn sich der Strom im Laufe der Ansteuerung ändert.

Eine Berechnungsmöglichkeit zur Bestimmung der Auslösereserve basiert beispielsweise darauf, dass man sich einen fiktiven Nullpunkt der e-Funktion errechnet. Dieser Nullpunkt definiert den Zeitpunkt, an dem unter Berücksichtigung des aktuellen TMM und des aktuellen Stroms $I_{akt}$ TMM = 0 ist. In der Kenntnis des Grenzstroms $I_{grenz}$, der $\tau$-Klasse und der Unsymmetrieinformation bezüglich der Phasen, die aktuell vorliegen, kann eine dynamische Vorhersage der Zeit bis zur Auslösung, d. h. dem Abschalten des Motors, gemacht werden. Auf der Basis des fiktiven Nullpunkts kann zu jedem Zeitpunkt eine aktuelle zeitliche Vorhersage getroffen werden, wie dies in FIG 3 unten durch horizontale Balken angezeigt ist. Dabei kann bei jeder Aktualisierung der aktuelle TMM-Wert sowie der aktuelle Strom berücksichtigt werden.

Erfindungsgemäß wird nun die zeitliche Vorhersage der Auslösereserve mit einer Anwenderfunktion verknüpft. Beispielsweise kann so die dynamische zeitliche Vorhersage der Auslösereserve einer elektronischen Überlastfunktion mit einer Überlastmeldung beziehungsweise -warnung verknüpft werden. Der Anwender kann, wie bereits erwähnt, vor der Benutzung eines Ansteuerprofils, das aller Voraussicht nach zu einem automatischen Abschalten des Motors führen wird, gewarnt werden. Dieses ungewollte Abschalten kann bei gewissen Prozessen sehr nachteilige Folgen haben.

Die einzelnen Parameter zur Bestimmung der Auslösereserve können dabei durch die Parametriereinheit 6 (vergleiche FIG 1) mit entsprechender Eingabeschnittstelle eingegeben werden. Ferner kann ein entsprechend erhaltener, gegebenenfalls normierter Vorhersagewert der zeitlichen Auslösereserve zur Weiterverarbeitung einer speicherprogrammierbaren Steuerung (SPS) oder einem sonstigen System zur Verfügung gestellt werden.

Nachfolgend sei ein konkretes Ausführungsbeispiel der vorliegenden Erfindung beschrieben. Demnach ist beispielsweise ein Lüftermotor zwingend zur Kühlung eines Produktionsprozesses notwendig. Ein Lüfterausfall würde zu einem Schaden an einer Veredelung und somit zum Ausschuss führen. Nach bisherigem Stand der Technik gibt es vor Beginn des Veredelungsprozesses keine Aussage, ob die Kühlung über die Dauer des Veredelungsprozesses aufrechterhalten werden kann. Erfindungsgemäß parametriert nun der Anwender die maximale Prozesslaufzeit als Predictorgrenzwert. Durch entsprechende Parametereinstellung wird eine Unterschreitung der notwendigen Kühlzeit als Prozessstörung definiert. Vor Einfahrt des Rohteils in den Veredelungsprozess wird anhand des Thermal Memory Predictor TMP und dessen Grenzwertwächter geprüft, ob die zeitliche thermische Reserve für das Durchlaufen des Veredelungsprozesses gegeben ist. Auf diese Weise lässt sich der Motor und somit der Gesamtprozess gezielter nutzen. Insbesondere können kritische Prozessabschnitte besser abgesichert werden.

**Patentansprüche**

1. Schutzvorrichtung für eine elektrische Maschine gegen Stromüberlastung **gekennzeichnet durch**

 - eine Stromwertbereitstellungseinrichtung zum Bereitstellen eines aktuellen Stromwerts, mit dem die elektrische Maschine betrieben wird,
 - eine Vorhersageeinrichtung (2, 4) zum Vorhersagen eines absoluten oder relativen Zeitwerts in Abhängigkeit von dem aktuellen Stromwert und
 - eine Verwertungseinrichtung (5) zum Verwerten des Zeitwerts zur Erzeugung eines Steuerungssignals.

2. Schutzvorrichtung nach Anspruch 1, wobei in der Vorhersageeinrichtung (2, 4) eine aktuelle thermische Größe bezogen auf den aktuellen Stromwert berechenbar ist, so dass die thermische Größe als Grundlage für die Vorhersage verwendbar ist.

3. Schutzvorrichtung nach Anspruch 2, wobei die thermische Größe in der Vorhersageeinrichtung (2, 4) rekursiv berechenbar ist.

4. Schutzvorrichtung nach Anspruch 2 oder 3, wobei der Zeitwert mit der aktuellen thermischen Größe dynamisch berechenbar ist.

5. Schutzvorrichtung nach einem der vorhergehenden Ansprüche, wobei die Vorhersageeinrichtung (2, 4) und/oder die Verwertungseinrichtung (5) parametrierbar ist.

6. Schutzvorrichtung nach einem der vorhergehenden Ansprüche, wobei in der Verwertungseinrichtung (5) als Steuerungssignal ein Abschaltsignal oder Warnsignal erzeugbar ist.

7. Verfahren zum Schutz einer elektrischen Maschine gegen Stromüberlastung **gekennzeichnet durch**

   - Bereitstellen eines aktuellen Stromwerts, mit dem die elektrische Maschine betrieben wird,
   - Vorhersagen eines absoluten oder relativen Zeitwerts in Abhängigkeit von dem aktuellen Stromwert und
   - Erzeugen eines Steuerungssignals unter Verwendung des Zeitwerts und
   - Ansteuern der elektrischen Maschine mit dem Steuerungssignal.

8. Verfahren nach Anspruch 7, wobei eine aktuelle thermische Größe bezogen auf den aktuellen Stromwert berechnet und die thermische Größe als Grundlage für die Vorhersage verwendet wird.

9. Verfahren nach Anspruch 8, wobei die thermische Größe rekursiv berechnet wird.

10. Verfahren nach Anspruch 8 oder 9, wobei der Zeitwert mit der aktuellen thermischen Größe dynamisch berechnet wird.

11. Verfahren nach einem der Ansprüche 7 bis 10, wobei der Prozess des Erzeugens eines Steuerungssignals individuell parametriert wird.

12. Verfahren nach einem der Ansprüche 7 bis 11, wobei als Steuerungssignal ein Abschaltsignal oder Warnsignal erzeugt wird.

FIG 1

## FIG 2

$I/I_e$

$I_{grenz}$

$I_{akt}$

1,2

1,1

Abschaltung da TMM
Überlauf, je nach
Parametrierung

t

## FIG 3

TMM[%]

100 % = Auslösung

fiktiver Nullpunkt

t

Zeit vom fiktiven Nullpunkt bis Auslösung
Zeit vom fiktiven Nullpunkt bis aktuellen Wert TMM
Vorhersagezeit bis Auslösung (zeitliche Auslösereserve)

**Europäisches Patentamt**

## EUROPÄISCHER RECHERCHENBERICHT

Nummer der Anmeldung

EP 03 01 5895

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 424 266 B1 (COISH ROBERT GEORGE ET AL) 23. Juli 2002 (2002-07-23) * Absatz '0057! - Absatz '0064!; Anspruch 1 * * Absätze '0082!,'0086! - Absatz '0089! * | 1-12 | H02H6/00 |
| X | EP 0 999 629 A (ABB RESEARCH LTD) 10. Mai 2000 (2000-05-10) * Ansprüche 1,9 * | 1,5-7, 11,12 | |
| X | US 4 467 260 A (MALLICK JR GEORGE T ET AL) 21. August 1984 (1984-08-21) * Spalte 31, Zeile 46 - Spalte 32, Zeile 11 * * Spalte 1, Zeile 45 - Spalte 2, Zeile 47 * | 1-12 | |
| A | GB 2 151 862 A (GEN ELECTRIC PLC) 24. Juli 1985 (1985-07-24) * das ganze Dokument * | 1,7 | |

**RECHERCHIERTE SACHGEBIETE (Int.Cl.7)**

H02H
H02P

Der vorliegende Recherchenbericht wurde für alle Patentansprüche erstellt

| Recherchenort | Abschlußdatum der Recherche | Prüfer |
|---|---|---|
| DEN HAAG | 28. November 2003 | Imbernon, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie,übereinstimmendes Dokument

EPO FORM 1503 03 82 (P04C03)

**ANHANG ZUM EUROPÄISCHEN RECHERCHENBERICHT
ÜBER DIE EUROPÄISCHE PATENTANMELDUNG NR.**     EP 03 01 5895

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 6424266 | B1 | 23-07-2002 | US | 2002180611 A1 | 05-12-2002 |
| EP 0999629 | A | 10-05-2000 | EP | 0999629 A1 | 10-05-2000 |
| US 4467260 | A | 21-08-1984 | KEINE | | |
| GB 2151862 | A | 24-07-1985 | KEINE | | |

Für nähere Einzelheiten zu diesem Anhang : siehe Amtsblatt des Europäischen Patentamts, Nr.12/82